# EUROPÄISCHE PATENTSCHRIFT

(11) **EP 0 682 422 B1**
(45) Veröffentlichungstag und Bekanntmachung des Hinweises auf die Patenterteilung: **27.11.2002**
(21) Anmeldenummer: 95106944.2
(22) Anmeldetag: 08.05.1995
(51) Int. Cl.: H04J 3/06, H04L 1/02, H04L 12/56, H04B 1/74

(54) **Verfahren und Schaltungsanordnung zum Synchronisieren von redundant übertragenen Nachrichtenzellenströmen**
Method and device for synchronising redundantly transmitted information cell streams
Méthode et dispositif pour synchroniser un train de cellules transmis avec redondance

(30) Priorität: 11.05.1994 DE 4416720
(43) Veröffentlichungstag der Anmeldung: 15.11.1995
(73) Patentinhaber: SIEMENS AKTIENGESELLSCHAFT, 80333 München (DE)
(72) Erfinder: Edmaier, Bernhard, Dipl. Ing., D-82229 Seefeld (DE); Fischer, Wolfgang, Dr. Ing., D-82110 Germering (DE)

(56) Entgegenhaltungen:
- US-A- 5 440 565
- INTERNATIONAL CONFERENCE ON COMMUNICATIONS, 1.Mai 1994, USA, Seiten 1341-1345, XP000438716 C. LI ET AL.: "Implementation and performance analysis fo congestion-tolerant isochronous communication in ATM networks using diversified routing"
- OHTA H.; UEDA H.: 'Hitless Line Protection Switching Method for ATM Networks' IEEE INTERNATIONAL CONFERENCE ON COMMUNICATIONS (ICC) Bd. 1, 23 Mai 1993 - 26 Mai 1993, Seiten 272 - 276, XP000371105

## Beschreibung

Die Erfindung betrifft ein Verfahren und eine Schaltungsanordnung zum Synchronisieren von redundant übertragenen Nachrichtenzellenströmen gemäß Patentanspruch 1 bzw. Patentanspruch 6.

Eine derartiges Verfahren und eine derartige Schaltungsanordnung sind bereits aus Ohta, H., Ueda, H.: "Hitless Line Protection Switching Method for ATM Networks", IEEE International Conference on Communications ICC '93, Seiten 272 bis 276 bekannt. Bei diesem bekannten Verfahren bzw. bei dieser bekannten Schaltunganordnung ist am Ausgang einer am Anfang eines Leitungspaares liegenden Koppeleinrichtung sowie am Eingang einer am Ende des Leitungspaares liegenden Koppeleinrichtung jeweils eine gesonderte Steuereinrichtung vorgesehen. Durch die an dem betreffenden Ausgang liegende Steuereinrichtung wird dabei ein zu übertragender Nachrichtenstrom dupliziert, um über das Leitungspaar zwei identische Nachrichtenzellenströme zu der am Ende des Leitungspaares liegenden, aus zwei leitungsindividuellen Puffern gebildeten Steuereinrichtung zu übertragen. Durch letztere erfolgt eine Synchronisierung der beiden zugeführten Nachrichtenzellenströme sowie ein Weiterleitung des über eine als Ersatzweg festgelegte Leitung des Leitungspaares übetragenen Nachrichtenzellenstromes nach erfolgter Synchronisierung. Für diese sind drei unterschiedliche Verfahren beschrieben. Eines dieser Verfahren läuft auf einen bitweisen Vergleich der über das Leitungspaar übertragenen Nachrichtenzellen hinaus. Bei einem weiteren Verfahren werden identische Steuerzellen (OAM-Zellen) in die beiden Nachrichtenzellenströme eingefügt, wobei das Auftreten der Steuerzellen in den beiden Puffern gesondert überwacht wird. Das Auftreten einer Steuerzelle in dem voreilenden, zunächst über einen Selektor weitergeleiteten Nachrichtenzellenstrom führt dabei zu einer Unterbrechung dieser Weiterleitung. Der Selektor wird dann mit dem Auftreten einer Steuerzelle in dem nacheilenden Nachrichtenzellenstrom umgesteuert, so daß von diesem Zeitpunkt an lediglich dieser Nachrichtenzellenstrom weitergeleitet wird. Bei dem verbleibenden Verfahren werden schließlich die Steuerzellen periodisch in die beiden Nachrichtenzellenströme eingefügt. Dabei wird durch das Auftreten der Steuerzellen in dem nacheilenden Nachrichtenzellenstrom lediglich die Weiterleitung der Nachrichtenzellen ohne Umschalten des Selektors getriggert. Nähere Angaben bezüglich der verwendeten Steuerzellen und deren Auswertung in den leitungsindividuellen Puffern sind jedoch der genannten Druckschrift nicht zu entnehmen.

Es ist nun Aufgabe der vorliegenden Erfindung einen Weg zu zeigen, wie ein Verfahren und eine Schaltungsanordnung gemäß Oberbegriff des Patentanspruches 1 bzw. 5 ausgebildet werden können, um eine gegenüber dem Stand der Technik optimalere Synchronisierung von Nachrichtenzellenströmen durchführen zu können.

Gelöst wird diese Aufgabe bei einem Verfahren gemäß Oberbegriff des Patentanspruches 1 durch die in diesem Patentanspruch angegebenen Verfahrensmerkmale. Die Erfindung bringt dabei den Vorteil mit sich, daß durch die Auswertung der in den Steuerzellen enthaltenen Folgenummern und einer damit verbundenen Ermittlung des zeitlichen Versatzes der beiden Nachrichtenzellenströme ein an die Erfordernisse des Kommunikationsnetzes angepaßter Laufzeitausgleich der beiden Nachrichtenzellenströme durchgeführt werden kann, d.h. daß der Laufzeitausgleich nicht zwangsläufig abrupt durchzuführen ist.

Gemäß Patentanspruch 3 ist beispielsweise vorgesehen, daß die Verzögerung des gerade voreilenden Nachrichtenzellenstromes graduell durchgeführt wird. Dies bringt den Vorteil mit sich, daß Verzögerungszeitschwankungen innerhalb tolerierbarer Grenzwerte gehalten werden können. Dies ist insbesondere dann von Bedeutung, wenn von einem aktiven Weg, über welchen Audio-, Video- oder Multimedia-Verbindungen verlaufen, auf einen Ersatzweg umzuschalten und dabei für diese Verbindungen eine garantierte minimale Verzögerungszeitschwankung gefordert ist.

Weitere zweckmäßige Ausgestaltungen des Verfahrens und der Schaltungsanordnung gemäß der vorliegenden Erfindung ergeben sich aus den Patentansprüchen 2, 4, 5 und 7.

Die vorstehend aufgezeigte Aufgabe wird bei einer Schaltungsanordnung gemäß Oberbegriff des Patentanspruches 6 durch die in diesem Patentanspruch angegebenen schaltungstechnischen Merkmale gelöst. Der Vorteil dieser Schaltungsanordnung besteht dabei in dem relativ geringen schaltungstechnischen Aufwand für eine Synchronisierung zweier Nachrichtenzellenströme.

Im folgenden wird die vorliegende Erfindung anhand von Zeichnungen beispielsweise näher erläutert.
- FIG 1: zeigt in einem Blockschaltbild ausschnittweise ein ATM-Kommunikationsnetz, bei welchem die vorliegende Erfindung angewandt ist,
- FIG 2: gibt das Zusammenwirken zweier Koppeleinrichtungen wieder, auf welches im folgenden näher eingegangen wird, und
- FIG 3: zeigt ausschnittweise einen möglichen Aufbau einer in FIG 1 lediglich schematisch dargestellten zentralen Synchronisiereinrichtung.

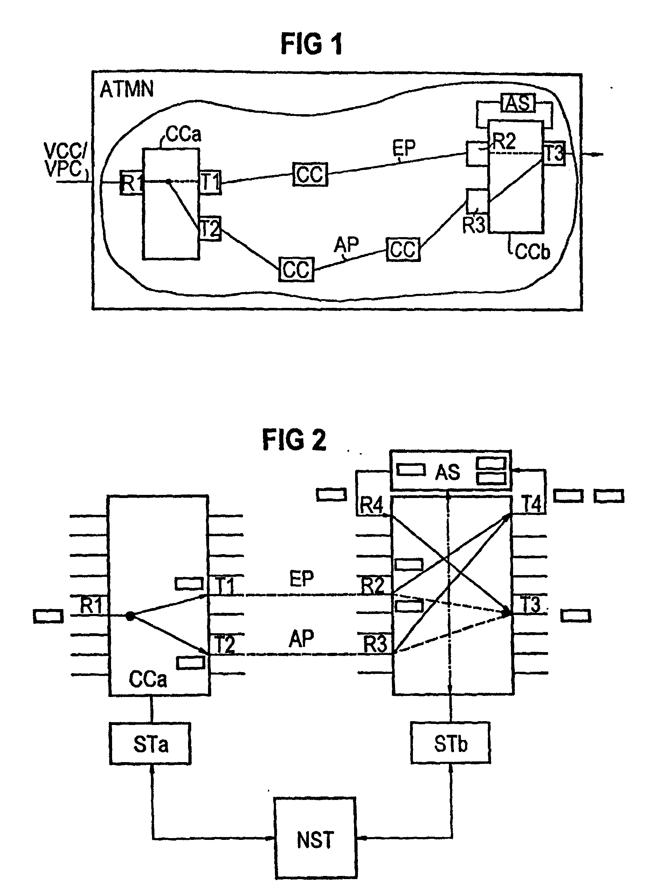

In FIG 1 ist ausschnittweise ein nach einem asynchronen Transfermodus ("Asynchronous Transfer Mode") arbeitendes ATM-Kommunikationsnetz ATMN dargestellt, welches aus einer Vielzahl von Koppeleinrichtungen gebildet sein möge. Innerhalb dieses ATM-Kommunikationsnetzes werden in gleicher Richtung verlaufende, in bekannter Weise eingerichtete virtuelle Verbindungen beispielsweise über sogenannte virtuelle Pfade geführt, d.h. diese virtuellen Pfade führen jeweils eine Mehrzahl von virtuellen Verbindungen. Die Koppeleinrichtungen mögen dabei als sogenannte "Cross Connects" ausgebildet sein, über welche virtuelle Pfade fest eingerichtet werden und über längere Zeit bestehen bleiben. Diese Koppeleinrichtungen können jedoch auch aus Vermittlungseinrichtungen bestehen, über welche virtuelle Pfade im Zuge eines entsprechenden Verbindungsaufbaus wahlweise eingerichtet werden können. Da ein solcher virtueller Pfad beispielsweise bis zu 65536 virtuelle Verbindungen enthalten und außerdem eine hohe Summenbitrate von beispielsweise bis zu 2,4 Gbyte/s aufweisen kann, muß ein solcher virtueller Pfad im Bedarfsfalle möglichst schnell auf einen Ersatzweg ohne Verlust von Nachrichtenzellen umgeschaltet werden. Dafür wird innerhalb des ATM-Kommunikationsnetzes für jeden Pfad, im folgenden als aktiver Pfad bezeichnet, ein Ersatzpfad festgelegt. Der jeweilige aktive Pfad und der zugehörige Ersatzpfad werden im folgenden als Pfadpaar bezeichnet und verlaufen dabei über getrennte Wege. Es sei hier bereits darauf hingewiesen, daß zwar nachfolgend die vorliegende Erfindung anhand von innerhalb des ATM-Kommunikationsnetzes eingerichteten virtuellen Pfaden erläutert wird, die Erfindung jedoch auch auf einzelne virtuelle Verbindungen bzw. Pfadgruppen anwendbar ist, die jeweils über ein aus einem aktiven Weg und einem Ersatzweg gebildetes Wegepaar verlaufen können.

In FIG 1 ist stellvertretend für eine Vielzahl von innerhalb des ATM-Kommunikationsnetzes ATMN verlaufenden virtuellen Pfadpaaren ein zwischen zwei Koppeleinrichtungen einrichtbares virtuelles Pfadpaar schematisch dargestellt. Die Koppeleinrichtungen sind dabei mit CCa und CCb bezeichnet. Die Koppeleinrichtung CCa stellt den Anfang des virtuellen Pfadpaares dar und erhält an einer Schnittstelleneinrichtung R1 die innerhalb eines Zubringerpfades VPC auftretenden Nachrichtenzellen zugeführt. Der mit AP bezeichnete aktive Pfad verläuft von der Koppeleinrichtung CCa aus über eine mit dieser verbundene Schnittstelleneinrichtung T2 sowie zwei mit CC bezeichnete Zwischenkoppeleinrichtungen zu einer mit R3 bezeichneten Schnittstelleneinrichtung der Koppeleinrichtung CCb. Der zugehörige Ersatzpfad EP verläuft dagegen über eine der Koppeleinrichtung CCa zugehörige Schnittstelleneinrichtung T1 und eine Zwischenkoppeleinrichtung CC zu einer Schnittstelleneinrichtung R2 der Koppeleinrichtung CCb. Im Normalfall mögen dabei Nachrichtenzellen lediglich über den aktiven Pfad AP an eine einen Ausgang der Koppeleinrichtung CCb darstellende Schnittstelleneinrichtung T3 weitergeleitet werden. Lediglich auf einen Anstoß hin wird mit Hilfe einer der Koppeleinrichtung CCb zugeordneten zentralen Synchronisiereinrichtung AS "Alignment Server" von dem aktiven Pfad AP auf den zugehörigen Ersatzpfad EP umgeschaltet, d.h. nach der Umschaltung werden die über diesen Ersatzpfad eintreffenden Nachrichtenzellen an die Schnittstelleneinrichtung T3 weitergeleitet.

Im übrigen kann der Ersatzpfad EP je nach der Auslegung des ATM-Komunikationsnetzes entweder erst auf den genannten Anstoß hin nach Maßgabe der Netzauslastung und der geforderten Übertragungskapazität festgelegt werden oder bereits hinsichtlich des Weges festgelegt sein, wobei dann für den Ersatzpfad erst auf einen Anstoß hin eine der Übertragungskapazität des aktiven Pfades entsprechende Übertragungskapazität angefordert wird. Dabei kann die angeforderte Übertragungskapazität bis zu einem Anstoß für einen niederprioren Nachrichtenverkehr benutzt werden.

Anhand der FIG 2 wird nachfolgend auf das Verfahren zur Umschaltung von dem aktiven Pfad AP auf den Ersatzpfad EP näher eingegangen.

In FIG 2 sind von den in FIG 1 dargestellten Koppeleinrichtungen lediglich die beiden Koppeleinrichtungen CCa und CCb wiedergegeben. Dabei wird davon ausgegangen, daß zunächst über den Zubringerpfad VPC eintreffende Nachrichtenzellen ausschließlich von der Schnittstelleneinrichtung R1 der Koppeleinrichtung CCa her über den aktiven Pfad AP zu der Schnittstelleneinrichtung T3 der Koppeleinrichtung CCb hin übertragen werden. Die Nachrichtenzellen mögen dafür innerhalb der Koppeleinrichtungen CCa und CCb beispielsweise nach dem sogenannten "Self-Routing"-Prinzip weitergeleitet werden, indem jeder Nachrichtenzelle nach Maßgabe des in dieser jeweils vorhandenen externen Zellenkopfes ("Header") bei Eintritt in die jeweilige Koppeleinrichtung ein interner "Self-Routing"-Zellenkopf vorangestellt wird. Dieser interne Zellenkopf wird im Zuge des Einrichtens des virtuellen Pfades beispielsweise durch eine der jeweiligen Koppeleinrichtung zugeordnete Steuereinrichtung ST bereitgestellt und enthält sämtliche Wegeinformationen für die Weiterleitung der zu dem virtuellen Pfad gehörenden Nachrichtenzellen innerhalb der jeweiligen Koppeleinrichtung. Im Falle der Koppeleinrichtung CCa sind das Informationen für die Übertragung von Nachrichtenzellen zwischen der Schnittstelleneinrichtung R1 und der Schnittstelleneinrichtung T2. Dagegen enthält der in der Koppeleinrichtung CCb für den virtuellen Pfad bereitgestellte interne Zellenkopf Informationen für die Übertragung von Nachrichtenzellen von der Schnittstelleneinrichtung R3 zu der Schnittstelleneinrichtung T3. Der jeweilige interne Zellenkopf ist dabei in der Schnittstelleneinrichtung R1 bzw. R3 und in entsprechenden Schnittstelleneinrichtungen der übrigen in den virtuellen Pfad einbezogenen Koppeleinrichtungen des Kommunikationsnetzes ATMN gespeichert.

Im übrigen kann anstelle des "Self-Routing"-Prinzips auch alternativ das sogenannte Umwerteprinzip für die Weiterleitung von Nachrichtenzellen innerhalb der jeweiligen Koppeleinrichtung benutzt sein, nach welchem lediglich der der jeweiligen Nachrichtenzelle zugehörige externe Zellenkopf modifiziert wird.

Auf ein Umsteuersignal, welches beispielsweise von einer zentralen Netz-Steuereinrichtung NST her in Form wenigstens einer Steuerzelle ("Operation, Administration and Maintenance"-Zelle), im folgenden als OAM-Zelle bezeichnet, der Steuereinrichtung ST einer der Koppeleinrichtungen CCa und CCb zugeführt ist, wird eine Umschaltung des virtuellen Pfades AP auf den Ersatzpfad EP eingeleitet. Bei der ein solches Umsteuersignal empfangenden Steuereinrichtung möge es sich dabei beispielsweise um die der Koppeleinrichtung CCb zugeordnete Steuereinrichtung STb handeln. Diese Steuereinrichtung stellt daraufhin einen neuen internen Zellenkopf bereit, der Wegeinformationen enthält, um die dem betreffenden virtuellen Pfad AP zugehörigen Nachrichtenzellen von der Schnittstelleneinrichtung R3 her auf eine Schnittstelleneinrichtung T4 umzuleiten, an welcher die bereits erwähnte zentrale Synchronisiereinrichtung AS eingangsseitig angeschlossen ist. Dieser neue interne Zellenkopf wird der Schnittstelleneinrichtung R3 zugeführt und dort anstelle des bisher für den virtuellen Pfad festgehaltenen internen Zellenkopfes gespeichert. Damit werden nachfolgend eintreffende Nachrichtenzellen des virtuellen Pfades AP nicht mehr direkt der Schnittsteileneinrichtung T3, sondern zunächst der zentralen Synchronisiereinrichtung AS zugeführt, die über einen in der Koppeleinrichtung CCb eingerichteten Steuerkanal ebenfalls die OAM-Zelle zugeführt erhält.

Ausgangsseitig ist die zentrale Synchronisiereinrichtung AS an eine Schnittstelleneinrichtung R4 angeschlossen, in welcher ein interner Zellenkopf hinterlegt ist, der den diese zentrale Synchronisiereinrichtung durchlaufenden Nachrichtenzellen für eine Weiterleitung an die Schnittstelleneinrichtung T3 vorangestellt wird. Damit ist die zentrale Synchronisiereinrichtung in die Übertragung von über den aktiven Pfad AP eintreffenden Nachrichtenzellen mit einbezogen.

Nach der Zuschaltung der zentralen Synchronisiereinrichtung AS wird entweder von dieser oder der zugehörigen Steuereinrichtung ST her ein Steuersignal in Form wenigstens einer dieses Zuschalten anzeigenden OAM-Zelle zu der Steuereinrichtung STa der Koppeleinrichtung CCa hin übertragen. Dafür kann beispielsweise ein zwischen den beiden Koppeleinrichtungen eingerichteter virtueller Steuerkanal benutzt werden, der beispielsweise in einem dem aktiven Pfad AP zugeordneten, jedoch in Gegenrichtung verlaufenden Pfad eingerichtet ist. Auf das Auftreten einer solchen OAM-Zelle hin wird dann von der Steuereinrichtung STa der bisher in der Schnittstelleneinrichtung R1 für den virtuellen Pfad AP gespeicherte interne Zellenkopf derart modifiziert, daß nachfolgende Nachrichtenzellen des virtuellen Pfades dupliziert und die daraus resultierenden, einander zugeordneten Nachrichtenzellen gesondert über den aktiven Pfad AP und den zugehörigen Ersatzpfad EP übertragen werden. Dabei ist auf das Zuschalten der zentralen Synchronisiereinrichtung AS hin unter der Steuerung der Steuereinrichtung STb in der Schnittstelleneinrichtung R2 für diesen Ersatzpfad ein interner Zellenkopf hinterlegt, durch welchen die diesem Ersatzpfad zugehörigen Nachrichtenzellen ebenfalls über die Schnittstelleneinrichtung T4 zu der zentralen Synchronisiereinrichtung AS hin übertragen werden. Von dieser werden jedoch zunächst in einer nunmehr beginnenden Synchronisierphase lediglich die über den aktiven Pfad AP zugeführten Nachrichtenzellen weitergeleitet. Während der Synchronisierphase, auf die im folgenden noch näher eingegangen wird, werden jedoch die über den aktiven Pfad AP und den Ersatzpfad EP eintreffenden Nachrichtenzellenströme synchronisiert, indem die auf diesen Pfaden auftretenden unterschiedlichen Verzögerungszeiten ausgeglichen werden. Tritt dabei auf dem aktiven Pfad eine geringere Verzögerungszeit auf als auf dem Ersatzpfad, so werden die über den aktiven Pfad übertragenen Nachrichtenzellen verzögert, um einen Gleichlauf mit den Nachrichtenzellen auf dem Ersatzpfad zu erreichen. Erfahren dagegen die Nachrichtenzellen auf dem Ersatzpfad eine ge ringere Verzögerung als die zugehörigen Nachrichtenzellen auf dem aktiven Pfad, so werden die über den Ersatzpfad übertragenen Nachrichtenzellen entsprechend verzögert.

Bei einem dadurch erreichten Gleichlauf wird dann von der zentralen Synchronisiereinrichtung AS auf den Ersatzpfad umgeschaltet, d.h. von diesem Zeitpunkt an werden dann lediglich noch die über den Ersatzpfad eintreffenden Nachrichtenzellen zu der Schnittstelleneinrichtung T3 hin übertragen. Im Anschluß daran wird der zugehörigen Steuereinrichtung STb ein Steuersignal, beispielsweise in Form einer die Umschaltung bestätigenden OAM-Zelle, zugeführt. Daraufhin wird unter der Steuerung dieser Steuereinrichtung in der Schnittstelleneinrichtung R2 für den Ersatzpfad EP ein interner Zellenkopf hinterlegt, durch welchen die nachfolgenden Nachrichtenzellen direkt zu der Schnittstelleneinrichtung T3 hin übertragen werden, d.h. die zentrale Synchronisiereinrichtung AS wird aus dem bisherigen Übertragungsweg herausgetrennt. Da bei diesem Heraustrennen von der zentralen Synchronisiereinrichtung AS her noch abgegebene Nachrichtenzellen von über den Ersatzweg direkt der Schnittstelleneinrichtung T3 zugeführten Nachrichtenzellen überholt werden können, ist dafür Sorge zu tragen, daß die Nachrichtenzellen in der richtigen Reihenfolge weitergeleitet werden. Hierfür kann beispielsweise ein in der Schnittstelleneinrichtung T3 vorhandener Pufferspeicher benutzt sein, durch welchen die weiterzuleitenden Nachrichtenzellen entsprechend der geforderten Reihenfolge sortiert werden. Darüber hinaus wird der Steuereinrichtung STa der Koppeleinrichtung CCa über den zuvor genannten Steuerkanal ein Steuersignal in Form wenigstens einer die Umschaltung auf den Ersatzpfad anzeigenden OAM-Zelle zugeführt, woraufhin unter der Steuerung der Steuereinrichtung STa der in der Schnittstelleneinrichtung R1 bisher gespeicherte interne Zellenkopf derart modifiziert wird, daß nachfolgend Nachrichtenzellen lediglich noch über den Ersatzpfad EP weitergeleitet werden.

Vorstehend wurde davon ausgegangen, daß das erwähnte Umsteuersignal (OAM-Zelle bzw. OAM-Zellen) der Steuereinrichtung STb von der Netz-Steuereinrichtung NST her zugeführt worden ist. Alternativ dazu kann diese OAM-Zelle bzw. können diese OAM-Zellen auch der Steuereinrichtung STa der Koppeleinrichtung CCa zugeführt sein. In diesem Falle wird zunächst von der Steuereinrichtung STa aus beispielsweise über den aktiven Pfad AP eine festgelegte OAM-Zelle zu der Steuereinrichtung STb hin übertragen, auf welche in der Steuereinrichtung STb und nachfolgend in der Steuereinrichtung STa die zuvor erläuterten Steuerungsvorgänge ablaufen. Das heißt, die zeitweise Übertragung von Nachrichtenzellen von der Koppeleinrichtung CCa her sowohl über den aktiven Pfad AP als auch über den Ersatzpfad EP und die anschließende ausschließliche Übertragung von Nachrichtenzellen über den Ersatzpfad erfolgen erst dann, nachdem von der Koppeleinrichtung CCb eine die erfolgte Zuschaltung der zentralen Synchronisiereinrichtung AS anzeigende OAM-Zelle abgegeben wurde.

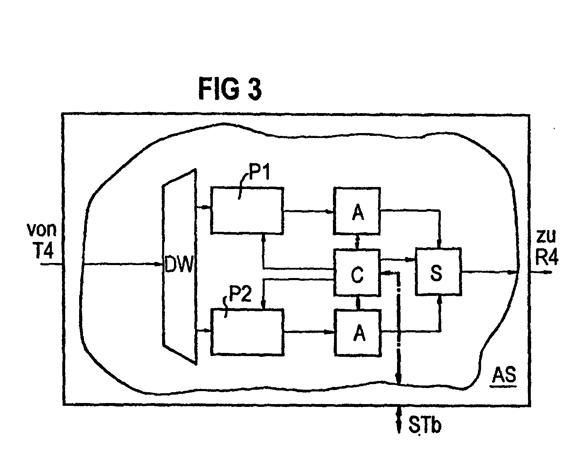

Anhand der FIG 3 wird nun auf das zuvor bereits erwähnte Synchronisierverfahren sowie auf einen möglichen Aufbau der zentralen Synchronisiereinrichtung AS näher eingegangen. Dabei sind für diese zentrale Synchronisiereinrichtung lediglich die zum Verständnis der vorliegenden Erfindung relevanten Schaltungsteile aufgeführt. Danach weist die zentrale Synchronisiereinrichtung AS eingangsseitig eine Datenweiche DW auf, welcher von der Schnittstelleneinrichtung T4 her zunächst der über den aktiven Pfad AP auftretende Nachrichtenzellenstrom und anschließend während der Synchronisierphase im Multiplexbetrieb zusätzlich der über den Ersatzpfad EP auftretende Nachrichtenzellenstrom zugeführt ist. In den jeweiligen Nachrichtenzellenstrom ist dabei, beispielsweise durch die Koppeleinrichtung CCa, in festgelegten Zeitabständen jeweils eine besonders gekennzeichnete OAM-Zelle eingefügt. Diese OAM-Zellen weisen jeweils eine von OAM-Zelle zu OAM-Zelle sich fortlaufend verändernde Folgenummer auf. Beim vorliegenden Ausführungsbeispiel ist nach jeweils 256 Nachrichtenzellen jeweils eine OAM-Zelle unter Verzögern des jeweiligen Nachrichtenzellenstromes eingefügt und die jeweilige Folgenummer durch 8 Bit codiert. Alternativ dazu kann durch eine solche OAM-Zelle auch eine in dem jeweiligen Nachrichtenzellenstrom enthaltene, auf die festgelegte Anzahl von Nachrichtenzellen folgende Leerzelle ersetzt werden. Tritt eine derartige Leerzelle dabei nicht innerhalb einer festgesetzten Zeit, beispielsweise einer durch 128 Zellen festgelegten Zeit auf, so wird eine OAM-Zelle gezielt in den Nachrichtenzellenstrom eingefügt, und zwar unter Verzögern des Nachrichtenzellenstromes. Bei dieser Vorgehensweise sollten jedoch die festgelegten Zeitabstände für das Einfügen von OAM-Zellen im Mittel eingehalten werden.

Der Nachrichtenzellenstrom des aktiven Pfades AP durchläuft von der Datenweiche DW aus einen Pufferspeicher P1, während der Nachrichtenzellenstrom des Ersatzpfades EP einem Pufferspeicher P2 zugeführt ist. Jedem dieser Pufferspeicher ist eine gesonderte Auswerteeinrichtung A nachgeschaltet, wobei diese Auswerteeinrichtungen gemeinsam mit einer Steuereinrichtung C in Verbindung stehen. Diese ist mit einem Steuereingang einer den Ausgang der zentralen Synchronisiereinrichtung AS darstellenden Schalteinrichtung S verbunden, die eingangsseitig zusätzlich mit Ausgängen der Auswerteeinrichtungen A in Verbindung steht. Diese Schalteinrichtung ist dabei auf das Auftreten einer oben erwähnten, eine Umschaltung fordernden OAM-Zelle hin durch die Steuereinrichtung C derart gesteuert, daß zunächst von den die Pufferspeicher P1 und P2 durchlaufenden Nachrichtenzellen lediglich die über den aktiven Pfad AP eintreffenden Nachrichtenzellen weitergeleitet werden. Dabei wird jedoch durch die jeweilige Auswerteeinrichtung A ständig das Auftreten von OAM-Zellen überwacht und die jeweilige OAM-Zelle der Steuereinrichtung C zugeführt. Anhand der in den OAM-Zellen jeweils geführten Folgenummer ermittelt diese zunächst, welcher der beiden Nachrichtenzellenströme der voreilende ist. Nachfolgende Nachrichtenzellen des voreilenden Nachrichtenzellenstromes werden dann unter der Steuerung der Steuereinrichtung C in dem jeweiligen Pufferspeicher (P1 bzw. P2) vor einer Weiterleitung zwischengespeichert, bis in dem nacheilenden Nachrichtenzellenstrom eine Folgenummer auftritt, die der für den voreilenden Nachrichtenzellenstrom gerade ermittelten Folgenummer entspricht. Bei Gleichheit dieser Folgenummern, d.h. bei einem erreichten Gleichlauf der beiden Nachrichtenzellenströme, wird dann die Schalteinrichtung S von der Steuereinrichtung C derart gesteuert, daß lediglich noch die über den Ersatzpfad eintreffenden Nachrichtenzellen weitergeleitet werden.

Bei vorliegendem Ausführungsbeispiel besteht dabei auch die Möglichkeit, für den Fall, daß der über den aktiven Pfad übertragene Nachrichtenzellenstrom der voreilende ist, anstelle einer gerade erläuterten abrupten Verzögerung eine graduelle Verzögerung durchzuführen, indem dieser Nachrichtenzellenstrom beim Durchlauf des Pufferspeichers P1 schrittweise unter der Steuerung der Steuereinrichtung C verzögert wird, bis in der Steuereinrichtung C gleichzeitig zwei gleiche Folgenummern vorliegen. In entsprechender Weise kann eine zunächst für den Ersatzpfad zu realisierende Verzögerung graduell nach erfolgter Umschaltung wieder abgebaut werden. Diese graduelle Veränderung der Verzögerung bringt dabei den Vorteil mit sich, daß Verzögerungszeitschwankungen innerhalb tolerierbarer Grenzwerte gehalten werden können. Dies ist insbesondere dann von Bedeutung, wenn innerhalb des umzuschaltenden virtuellen Pfades Audio-, Video- oder Multimedia-Verbindungen verlaufen, die garantierte minimale Verzögerungszeitschwankungen erfordern. Außerdem wird durch eine solche graduelle Verzögerung die durch die Weiterleitung von Nachrichtenzellen verursachte Burst-Größe beschränkt.

Vorstehend wurde lediglich als Beispiel der Fall betrachtet, daß ein einziger aktiver Pfad mit Hilfe einer zentralen Synchronisiereinrichtung auf einen zugeordneten Ersatzpfad umgeschaltet werden kann. Eine solche zentrale Synchronisiereinrichtung kann auch im Multiplexbetrieb einer Mehrzahl von virtuellen Pfaden zugeordnet sein, wenn diese sequentiell auf einen zugeordneten Ersatzpfad umzuschalten sind. Bei einer geforderten simultanen Umschaltung von virtuellen Pfaden kann eine der Anzahl der simultan umzuschaltenden virtuellen Pfade entsprechende Anzahl von zentralen Synchronisiereinrichtungen vorgesehen sein.

Darüber hinaus sei noch darauf hingewiesen, daß das vorstehende Verfahren zur Umschaltung von virtuellen Pfaden auf Ersatzpfade auch derart modifiziert sein kann, daß von der Koppeleinrichtung CCa her ein zugeführter Nachrichtenzellenstrom durch Duplizieren ständig sowohl über einen aktiven Pfad als auch über einen zugeordneten Ersatzpfad übertragen wird und die daraus resultierenden beiden Nachrichtenzellenströme der jeweiligen zentralen Synchronisiereinrichtung AS zugeführt sind. In dieser erfolgt ständig eine oben erläuterte Synchronisierung, um bei Ausfall eines der Wege auf den verbleibenden Weg umzuschalten.

Schließlich sei noch darauf hingewiesen, daß vorstehend das Synchronisierprinzip gemäß der vorliegenden Erfindung lediglich als Beispiel im Zusammenhang mit der Umschaltung eines virtuellen Pfades auf einen Ersatzpfad beschrieben worden ist. Die Erfindung ist jedoch nicht auf diesen Anwendungsfall beschränkt. Vielmehr ist dieses Synchronisierprinzip auch beispielsweise anwendbar, wenn einzelne virtuelle Verbindungen oder eine Mehrzahl von virtuellen Pfaden umfassende Pfadgruppen von einem aktiven Übertragungsweg auf einen Ersatzweg umzuschalten sind. Darüber hinaus ist das Synchronisierprinzip nicht nur in ATM-Kommunikationsnetzen, sondern allgemein in zellenorientierten Kommunikationsnetzen anwendbar, wenn innerhalb dieser Kommunikationsnetze Nachrichtenzellenströme zu synchronisieren sind, um beispielsweise Nachrichtenzellenströme störungsfrei, d.h. ohne Zellenverlust, ohne Duplizieren von Zellen, ohne Informationsverlust in den einzelnen Zellen und unter Einhaltung der Zellenreihenfolge, von einem aktiven Weg auf einen Ersatzweg umzuleiten. Dabei kann das Synchronisierprinzip abweichend von dem zuvor beschriebenen Ausführungsbeispiel nicht nur mit Hilfe einer zentralen Synchronisiereinrichtung, sondern auch mit Hilfe dezentraler Synchronisiereinrichtungen in den Koppeleinrichtungen eines Kommunikationsnetzes realisiert werden.

## Patentansprüche

1. Verfahren zum Synchronisieren von über ein Wegepaar (AP, EP) redundant übertragenen Nachrichtenzellenströmen in einem zellenorientierten, eine Mehrzahl von Koppeleinrichtungen (CCa, CCb, CC) aufweisenden Kommunikationsnetz (ATMN), mit Hilfe von in die beiden Nachrichtenzellenströme eingefügten Steuerzellen, wobei die Steuerzellen jeweils in festgelegten Zeitabständen am Anfang des Wegepaares in die beiden Nachrichtenzellenströme eingefügt werden
und wobei am Ende des Wegepaares das Auftreten von Steuerzellen gesondert für die beiden Nachrichtenzellenströme überwacht wird,
**dadurch gekennzeichnet,**
**daß** in den Steuerzellen jeweils eine von Steuerzelle zu Steuerzelle sich fortlaufend verändernde Folgenummer enthalten ist
und **daß** am Ende des Wegepaares anhand der in beiden Nachrichtenzellenströmen auftretenden Folgenummern der voreilende Nachrichtenzellenstrom ermittelt und bis zum Auftreten von gleichen Folgenummern in den beiden Nachrichtenzellenströmen verzögert wird.

2. Verfahren nach Anspruch 1,
**dadurch gekennzeichnet,**
**dass** das Verfahren in einem Kommunikationsnetz (ATMN) in Form eines nach einem asynchronen Transfermodus arbeitenden ATM-Kommunikationsnetzes verwendet wird.

3. Verfahren nach Anspruch 1 oder 2,
**dadurch gekennzeichnet,**
**daß** die Verzögerung des voreilenden Nachrichtenzellenstromes schrittweise durchgeführt wird.

4. Verfahren nach Anspruch 1 oder 2 oder 3,
**dadurch gekennzeichnet,**
**daß** am Ende des Wegepaares lediglich einer der beiden Nachrichtenzellenströme innerhalb des Kommunikationsnetzes weitergeleitet wird
und **daß** nach Ausgleich der Laufzeitunterschiede der beiden Nachrichtenzellenströme anstelle des bisher weitergeleiteten Nachrichtenzellenstromes der verbleibende Nachrichtenzellenstrom weitergeleitet wird.

5. Verfahren nach einem der Ansprüche 1 bis 4,
**dadurch gekennzeichnet,**
**daß** die Nachrichtenzellenströme durch im Zuge einer virtuellen Verbindung bzw. im Zuge mindestens eines virtuellen Pfades übertragenen Nachrichtenzellen gebildet sind.

6. Schaltungsanordnung zum Synchronisieren von über ein Wegepaar (EP, AP) redundant übertragenen Nachrichtenzellenströmen in einem zellenorientierten, eine Mehrzahl von Koppeleinrichtungen (CCa, CCb, CC) aufweisenden Kommunikationsnetz (ATMN), mit Hilfe von in die beiden Nachrichtenzellenströme eingefügten Steuerzellen, zur Durchführung des Verfahrens nach Anspruch 1,
**dadurch gekennzeichnet,**
**daß** eine am Anfang des Wegepaares liegende Koppeleinrichtung (CCa) derart ausgebildet ist, daß durch diese ein zugeführter Nachrichtenzellenstrom einerseits dupliziert wird und die daraus resultierenden identischen zwei Nachrichtenzellenströme gesondert über zwei dem Wegepaar zugehörige Wege (EP bzw. AP) weitergeleitet werden und andererseits in die beiden Nachrichtenzellenströme in festgelegten Zeitabständen jeweils eine Steuerzelle eingefügt wird und dabei die jeweilige Steuerzelle eine von Steuerzelle zu Steuerzelle sich fortlaufend verändernde Folgenummer führt,
und **daß** einer am Ende des Wegepaares (EP, AP) liegenden Koppeleinrichtung (CCb) wenigstens eine Synchronisiereinrichtung (AS) zugehörig bzw. zugeordnet ist, welcher die beiden Nachrichtenzellenströme zugeführt sind und welche derart ausgebildet ist, daß durch diese das Auftreten von Steuerzellen gesondert für die beiden Nachrichtenzellenströme überwacht wird und daß anhand der in den beiden Nachrichtenzellenströmen auftretenden Folgenummern der voreilende Nachrichtenzellenstrom ermittelt und bis zum Auftreten von gleichen Folgenummern in den beiden Nachrichtenzellenströmen verzögert wird.

7. Schaltungsanordnung nach Anspruch 6,
**dadurch gekennzeichnet,**
**daß** das Kommunikationsnetz (ATMN)ein nach einem asynchronen Transfermodus arbeitendes ATM-Kommunikationsnetz ist.

## Claims

1. Method for synchronization of message cell streams which are transmitted redundantly via a pair of paths (AP, EP), in a cell-oriented communications network (ATMN) which has a number of switching devices (CCa, CCb, CC), with the aid of control cells which are inserted into the two message cell streams, with the control cells each being inserted into the two message cell streams at defined time intervals at the start of the pair of paths,
and with the end of the pair of paths being monitored for the occurrence of control cells separately for the two message cell streams,
**characterized**
**in that** the control cells each contain a sequence number which is changed sequentially from one control cell to the next control cell,
and **in that**, at the end of the pair of paths, the leading message cell stream is determined on the basis of the sequence numbers which occur in the two message cell streams, and is delayed until the same sequence numbers occur in the two message cell streams.

2. Method according to Claim 1,
**characterized**
**in that** the method is used in a communications network (ATMN) in the form of an ATM communications network which operates using an asynchronous transfer mode.

3. Method according to Claim 1 or 2,
**characterized**
**in that** the leading message cell stream is delayed in steps.

4. Method according to Claim 1 or 2 or 3,
**characterized**
**in that**, at the end of the pair of paths, only one of the two message cell streams is passed on within the communications network,
and **in that** after compensating for the propagation time differences between the two message cell streams, the remaining message cell stream is passed on instead of the message cell stream which was previously passed on.

5. Method according to one of Claims 1 to 4,
**characterized**
**in that** the message cell streams are formed by message cells which are transmitted in the course of a virtual connection or in the course of at least one virtual path.

6. Circuit arrangement for synchronization of message cell streams which are transmitted redundantly via a pair of paths (EP, AP) in a cell-oriented communications network (ATMN) which has a number of switching devices (CCa, CCb, CC), with the aid of control cells which are inserted into the two message cell streams, for carrying out the method according to Claim 1,
**characterized**
**in that** a switching device (CCa) which is located at the start of the pair of paths is designed such that, firstly, it duplicates a message cell stream which is supplied and passes on the two identical message cell streams which result from this separately via two paths (EP and AP) which are associated with the pair of paths and, secondly, inserts a control cell at defined time intervals into each of the two message cell streams and, in the process, the respective control cell carries a sequence number which changes sequentially from one control cell to the next control cell,
and **in that** a switching device (CCb) which is located at the end of the pair of paths (EP, AP) is associated with or allocated at least one synchronization device (AS), to which the two message cell streams are supplied, and which is designed such that it monitors the two message cell streams separately for the occurrence of control cells, and such that the leading message cell stream is determined on the basis of the sequence numbers which occur in the two message cell streams, and the leading message cell stream is delayed until the same sequence numbers occur in both the message cell streams.

7. Circuit arrangement according to Claim 6,
**characterized in that** the communications network (ATMN) is an ATM communications network which operates using an asynchronous transfer mode.

## Revendications

1. Procédé pour synchroniser des flux de cellules d'informations, transmis avec redondance par l'intermédiaire d'une paire de trajets (AP, EP), dans un réseau de communication (ATMN) travaillant avec des cellules et comportant une multiplicité de dispositifs de connexion (CCa, CCb, CC), à l'aide de cellules de commande insérées dans les deux flux de cellules d'informations,
dans lequel les cellules de commande sont insérées à chaque fois à des intervalles de temps fixés, au début de la paire de trajets, dans les deux flux de cellules d'informations
et dans lequel, à la fin de la paire de trajets, l'apparition de cellules de commande est surveillée séparément pour les deux flux de cellules d'informations,
**caractérisé par le fait que**
dans les cellules de commande, il est contenu à chaque fois un numéro de séquence variant continuellement de cellule de commande en cellule de commande
et, à la fin de la paire de trajets, on détermine à l'aide des numéros de séquence apparaissant dans les deux flux de cellules d'informations le flux de cellules d'informations en avance et on le retarde jusqu'à l'apparition de numéros de séquence identiques dans les deux flux de cellules d'informations.

2. Procédé selon la revendication 1,
**caractérisé par le fait que**
le procédé est utilisé dans un réseau de communication (ATMN) ayant la forme d'un réseau de communication ATM travaillant selon un mode de transfert asynchrone.

3. Procédé selon la revendication 1 ou 2,
**caractérisé par le fait que**
le retardement du flux de cellules d'informations en avance est effectué pas à pas.

4. Procédé selon la revendication 1 ou 2 ou 3,
**caractérisé par le fait que**,
à la fin de la paire de trajets, on retransmet simplement l'un des deux flux de cellules d'informations à l'intérieur du réseau de communication
et que, après compensation des différences de temps de propagation des deux flux de cellules d'informations, on retransmet à la place du flux de cellules d'informations retransmis jusqu'alors le flux de cellules d'informations restant.

5. Procédé selon l'une des revendications 1 à 4,
**caractérisé par le fait que**
les flux de cellules d'informations sont formés par des cellules d'informations transmises au cours d'une liaison virtuelle ou au cours d'au moins un chemin virtuel.

6. Montage pour synchroniser des flux de cellules d'informations, transmis avec redondance par l'intermédiaire d'une paire de trajets (EP, AP), dans un réseau de communication (ATMN) travaillant avec des cellules et comportant une multiplicité de dispositifs de connexion (CCa, CCb, CC), à l'aide de cellules de commande insérées dans les deux flux de cellules d'informations, pour la mise en oeuvre du procédé selon la revendication 1,
**caractérisé par le fait que**
un dispositif de connexion (CCa) se trouvant au début de la paire de trajets est conçu de telle sorte que, d'une part, il duplique un flux de cellules d'informations envoyé et les deux flux de cellules d'informations identiques résultants sont retransmis séparément par l'intermédiaire de deux trajets (EP respectivement AP) associés à la paire de trajets et, d'autre part, une cellule de commande est insérée à chaque fois dans les deux flux de cellules d'informations à des intervalles de temps fixés et la cellule de commande respective gère alors un numéro de séquence variant continuellement de cellule de commande en cellule de commande,
et il est associé à un dispositif de connexion (CCb) se trouvant à la fin de la paire de trajets (EP, AP) au moins un dispositif de synchronisation (AS) auquel les deux flux de cellules d'informations sont envoyés et qui est conçu de telle sorte qu'il surveille l'apparition de cellules de commande séparément pour les deux flux de cellules d'informations et que, à l'aide des numéros de séquence apparaissant dans les deux flux de cellules d'informations, le flux de cellules d'informations en avance est déterminé et est retardé jusqu'à l'apparition de numéros de séquence identiques dans les deux flux de cellules d'informations.

7. Montage selon la revendication 6,
**caractérisé par le fait que**
le réseau de communication (ATMN) est un réseau de communication ATM travaillant selon un mode de transfert asynchrone.
